# EUROPEAN PATENT APPLICATION

(11) **EP 1 786 082 A2**
(43) Date of publication of application: **16.05.2007**
(21) Application number: 06255528.9
(22) Date of filing: 26.10.2006
(51) Int. Cl.: H02G 9/10

(54) **Underground chamber and wall member therefor**

(30) Priority: 09.11.2005 GB 0522834
(71) Applicant: Uponor Innovation AB, 513 81 Fristad (SE)
(72) Inventor: Bell, Harold Neville Stephen, Moira BT67 0SG (GB)
(74) Representative: Lunt, Mark George Francis

(57) **Abstract**

A wall member (20") for constructing an underground chamber (10") comprises at least two wall elements (20a',b') joined end to end. The wall elements comprise a plastics moulding that is hollow having spaced inner and outer walls (12,14) separated by strengthening ribs or webs (16). A top nose (18) of the element is closed, and a base (26) is open to provide a channel (28), bounded by flanges (12a,14a) of the inner and outer walls and the bases of the ribs. The channel is dimensioned to receive a nose of a corresponding wall element. The channel is deepened (52) and receives a metal strengthening square section bracing tube (54) that spans the joint wall elements. It forms roof of the channel (28).

## Description

### BACKGROUND

This invention relates to modular underground chambers. Such chambers are known that comprise individual wall elements that can be combined in different ways to construct chambers of different plan size, as well as depth.

A particular form of such chambers is supplied by the present applicant under the trade mark Radbox. Radbox chambers comprise wall elements that are hollow plastic moulded sections having spaced inner and outer walls separated by strengthening ribs joining the inner and outer walls. The tops, or noses, of the elements are closed, whereas the base is open. The side ends of the elements are also closed and provided with connection means enabling joining end to end of elements, or joining of elements to special corner elements or connectors, whereby a ring section is constructed (employing four corner connectors and at least four side elements). The possibility exists, of course, for other shapes beyond rectangular rings to be constructed with appropriately shaped corner pieces. Likewise, the corner pieces could comprise cross connectors or tee connectors to form other grid type arrangements.

Noses and bases of elements are shaped and dimensioned so that a nose of one element fits inside the base of another element, whereby rings can be stacked one upon the other to increase the depth of the so-formed chamber. The ribs do not extend the full height of the element. Whilst integral with the nose above, they stop short of the base edges of the inner and outer walls, so that a channel is formed in which a nose of another element fits.

The elements are provided in different sizes, both height and length, although their width, and the dimensions of their noses and bases, are arranged the same so that different sizes can be stacked on one another without steps forming in the walls of the formed chamber. However, longer wall elements thereby lack stiffness, at least, they do if shorter wall elements are not unnecessarily stiff. That is to say, the dimensions of the wall elements are arranged so that efficient use of material is made in smaller elements, but when these are lengthened there is a consequential loss of stiffness in the length direction. This loss occurs only in the length direction, since in the height direction, the ribs are also lengthened maintaining the strength per unit height. Consequently, longer elements are strengthened by the use of a channel section of metal fitted onto the noses of such elements, which noses are shaped to allow the channel section to fit on them without increasing the overall dimension of the nose. At least, the nose with a channel section fitted is arranged to be have the same dimensions as the noses of shorter wall elements that do not need the strengthening channel section. The reason for this is apparent from the desirability of being able to mix and match different wall elements, as well as employing the same corner and other connectors.

However, the present invention is concerned with the situation where even longer chambers are being constructed by joining wall elements end to end. While the individual panels are independently stiff enough for the purpose, when joined into an even longer wall member, the joint between them, and the overall length of the joined wall, is insufficiently stiff. Indeed, the joint represents a particular point of weakness. The current practice to strengthen such connected wall elements is to bolt an angle section of metal to the outside of the long walls of a ring. While satisfactory from a structural perspective, the result is untidy in appearance.

The present invention is concerned with providing an alternative wall construction.

### BRIEF SUMMARY OF THE DISCLOSURE

In accordance with the present invention there is provided a wall member for constructing an underground chamber, said wall member comprising at least two wall elements joined end to end, each wall element comprising a plastics moulding that is hollow having spaced inner and outer walls separated by strengthening ribs joining said inner and outer walls, side ends of the element, being provided with connector means, a top nose of the element, and a base thereof, which base is open to provide a channel, bounded by said inner and outer walls and the bases of said ribs, which channel is dimensioned to receive a nose of a corresponding wall element, wherein said channel is deepened and receives a metal strengthening brace that spans the joint between said wall elements, is connected to said inner and outer walls and forms a roof of said channel.

Preferably, said brace is a tube, preferably a rectangular section tube (which may be square. Preferably, said connection to said inner and outer walls is by screws through the inner and outer walls into said brace, whereby the walls are supported against said brace.

Preferably, said brace extends beyond the ends of said wall member, for connection with a corner connector adapted to be connected at each end of the wall member to form a ring.

In another aspect, the present invention provides an underground chamber ring comprising a wall member as defined above, first corner connectors at each end thereof and further wall elements and second corner connectors to form said ring as a closed ring, wherein said first corner connectors each comprise a hollow plastics moulding adapted to connect to the side ends of wall elements disposed at an angle with respect to one another, said moulding having a closed top providing a corner forming a continuation of said top noses of the adjoining wall elements, and an open base forming a continuation of said bases of the adjoining wall elements, and side ends provided with corresponding connector means and disposed at said angle with respect to one another, a notch in the side end wall adjoining said wall member into which an extension of said brace beyond the end of said side end of said wall member fits.

Preferably, said angle is substantially a right angle, and there are at least two of said wall members disposed on opposite sides of said ring, which ring is rectangular in plan, and all of said corner connectors are said first corner connectors.

Preferably, said wall elements of said wall member are formed without said deepening of the channel, said deepening comprising a separate forming step when said brace is to be applied. Likewise, said first corner connectors are preferably formed without said notch, in which event they are preferably identical to said further corner connectors, and said notch comprises a separate forming step.

Preferably, said forming step is in each case a grinding or milling operation.

### BRIEF DESCRIPTION OF THE DRAWINGS

Embodiments of the invention are further described hereinafter, by way of example, with reference to the accompanying drawings, in which:
Figure 1 is a side view of reinforced wall elements formed into a chamber of the type to which the present invention relates;
Figure 2 is a section on the line A-A in Figure 1, with insets (a) (b) and (c) showing details thereof;
Figure 3 is a side view of a longer chamber having elements joined end to end to form a wall member and in a known manner, with a cross-sectional inset (d);
Figure 4 is a section on the line B-B in Figure 3, with a detail inset (e);
Figure 5 is a side view of wall members in accordance with the present invention formed into a chamber, with a detail at inset (f);
Figure 6 is a section on the line C-C in Figure 5, with a detail inset (g); and
Figure 7 is a perspective view, in the direction of the Arrow D in Figure 5, of the underneath of a side of a chamber in accordance with the present invention; and
Figures 8a, b and c are respectively a perspective view, an end view and an enlarged detail C from Figure 8b, of an alternative embodiment of the present invention.

### DETAILED DESCRIPTION

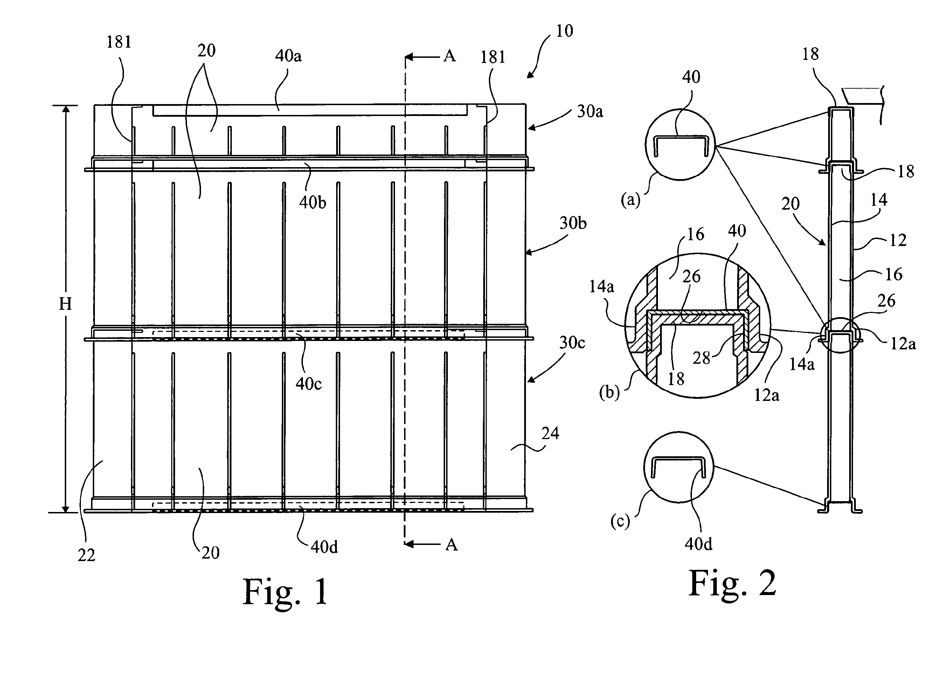

Figure 1 shows a side view of one form of a chamber 10 currently manufactured and sold by the present applicants under the trade mark RADBOX. This chamber comprises wall elements 20 stacked one upon the other to achieve an overall desired height H. Other arrangements of chamber are available. In the chamber 10 of Figure 1, the top element 20 is less high than the lower two elements. Each element 20 is connected at its side ends 181 to corner connectors 22, 24, to which further elements (not visible) are connected at right angles to the wall elements 20 shown in Figure 1. To these non-visible side elements, further corner connectors (not visible) are joined, and they are interconnected by wall elements behind and parallel to the wall elements 20. Thus four wall elements 20 and four corner units 22, 24 together define a ring element 30 forming a ring, each ring 30a, 30b, 30c being stacked one up on the other to form the chamber 10.

Each wall element 10 (see Figure 2) is a plastics moulding having inner wall 12 and outer wall 14 spaced supported by interconnecting ribs or webs 16 that extend from a top nose 18 (which nose is closed) to an open base 26. At the open base 26, the walls 12, 14 are flanged outwardly at 12a, 14a (see inset (b)) which, together with the bottom ends 26 of the ribs 16, define a channel 28. The channel 28 is sized to fit over the nose 18 of a wall element beneath.

In Figure 1 and 2 the wall elements 20 are long. Consequently, they are provided with reinforcement channels 40 (see inset (b) in Figure 2) which comprise a steel channel section fitted grippingly over the tops of noses 18. Here, the noses 18 are shaped so that, when the section 40 is fitted over the nose, the external dimension of the nose 18 is exactly the same as it would be if there was no channel section 40 employed. One reason for this is that the wall elements 20 requiring the longitudinal reinforcement are used with exactly the same corner pieces 22, 24 as are used with shorter wall elements not having such reinforcement. Likewise, as described further below, wall elements 20 may be joined end to end with other wall elements that also do not require reinforcement. Therefore, it is desirable that, with or without reinforcement, the nose dimensions of the all the wall elements that might be employed in the construction of a chamber are consistent.

Because the channel sections 40 fit on the noses 18, they are inwardly turned, as can be seen in inset (a) of Figure 2 in order to grip the nose 18. However, a lower channel section 40d is still required to stiffen the lowest wall element 20, but has no nose of a lower element to grip. Therefore, the lowest channel section 40d differs from the ones above by being flared outwardly so as to grip the flanges 40a, b of the bottom wall element 20.

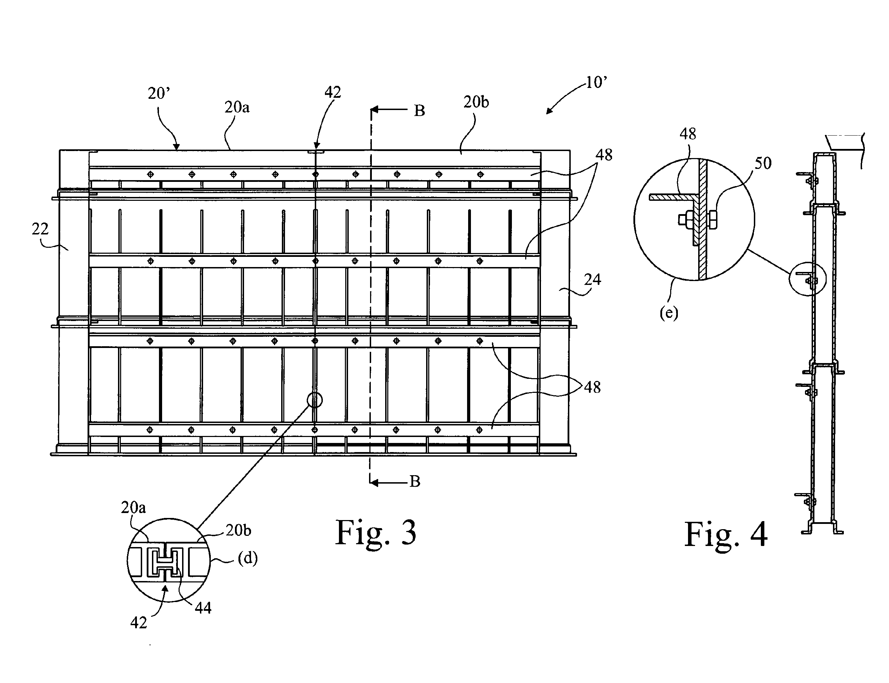

Turning to Figures 3 and 4, here, a chamber 10' is longer than the chamber 10 of Figures 1 and 2 and comprises two wall elements 20a,b joined end to end at a joint 42 to form a composite wall member 20'. The nature of the joints between abutting wall elements 20a, b and between wall elements 20a, b and respective corner units 22, 24 is not relevant to the present invention. It could be achieved by means of an H-section connecting piece 44, as shown schematically in inset (d) in Figure 3. While such a connection is strong in tension, compression and shear and is quite adequate, at least for the purposes of joining wall elements 20 to corner connectors 22,24, it provides a line of weakness in bending in the wall member 20' formed by joining to wall elements 20a, b end to end. Indeed, even without the joint, such a long panel would lack sufficient stiffness for the purposes of an underground chamber.

Therefore, the current solution, shown in Figures 3 and 4, is to connect stiffeners 48 along the length of the wall member 20', at several locations along its height. The stiffeners 48 are simple angle sections (as seen in inset (e) of Figure 4, and are connected by means of nuts and bolts 50). While being perfectly satisfactory from a structural point of view, such an arrangement is visually unattractive and is cumbersome and interferes with the smooth outer surface of the wall member. Moreover, because the stiffeners must be connected to the outside wall, they can interfere with the ability to insert holes in the walls for the passage of ducting entering the chambers. Finally, they also interfere with the ease of handling and packing for transportation and storage of the wall members.

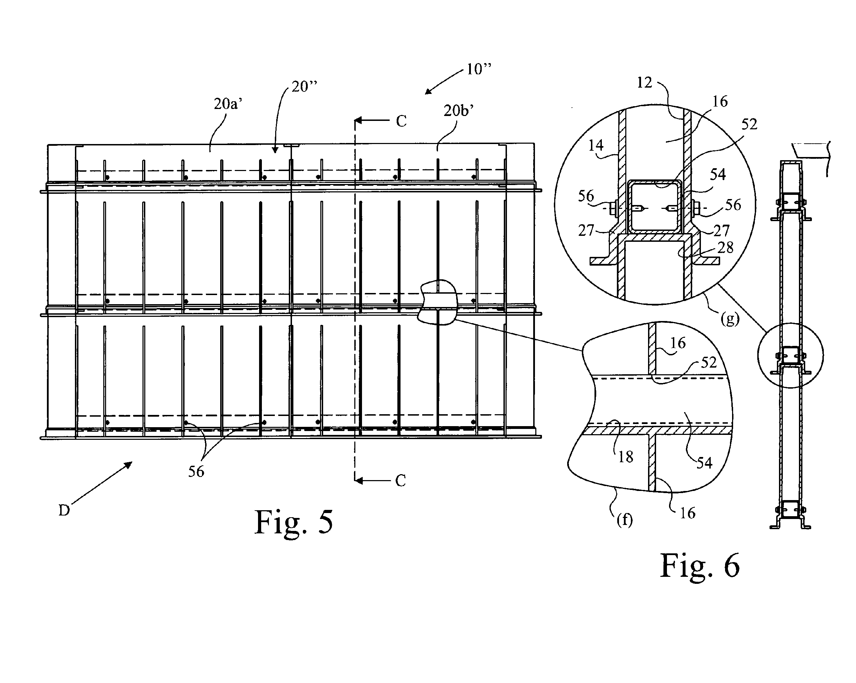

The present invention provides an improved arrangement, as shown in Figures 5 and 6. Here, when wall elements 20a',b' are to be joined together end to end to form a wall member 20", the ribs 16 are machined at the base 26 to provide a channel deepening 52 (see inset (g) of Figure 6). Into this channel deepening 52 is located a rectangular-(which in this case is square-) section tubular brace 54 that extends the full length of the wall member 20". Removing the ribs 16 inevitably weakens the connection between the inner and outer walls 12, 14. However, this weakening is more than adequately compensated by periodic screws 56 connecting the walls 12, 14 to the brace 54. Indeed, the screws 56 ensure that limbs 27 forming the channel 28 cannot spread under load, particularly for the bottom wall element that stands on such limbs. In inset (g) of Figure 6, the screws 56 are shown as self-tapping screws driven directly through the wall element into the tubular brace 54. This arrangement relies on the threads of the screws withstanding pullout forces, and it may be regarded that, over time, corrosion could affect the threaded connection between the screws and the relatively thin material of the brace 54, and undermine the integrity of the connection between the limbs 27 of the wall element and the brace 54. Accordingly, one alternative arrangement (not shown) that may be preferred is to drill right through the wall element 20 and the brace 54 and fit a through-bolt (or several of them, of course, along the length of the brace 54). When a nut is tightened on the end of each bolt, the limbs 27 are clamped together against the brace 54. Then the thread engagement between bolt and nut becomes the limiting factor. But since their thread engagement is much longer than between screws 56 and brace 54, the risk of failure is considerably reduced.

The depth of the deepening 52 is sufficient to enable the brace 54 to fit without encroaching on the space of channel 28, and therefore without interfering with the seating of one wall member 20" above the next. Indeed, the arrangement is such as to interfere neither with reinforced long wall elements 20, should they be employed in tandem, or with shorter wall elements 20a',b', as shown (which do not have the reinforcement). Thus, to all external appearances, other than the visibility of the screws 56, the wall member 20" is un-reinforced. Despite being disposed above the channel 28, the brace 54 is still in a lower position in the wall member 20" than the stiffeners 48 currently employed. Therefore there is less intrusion into the space of the wall member that is available for the positioning of ducting holes, and consequently there is less risk of interfering with a desired position of any such holes.

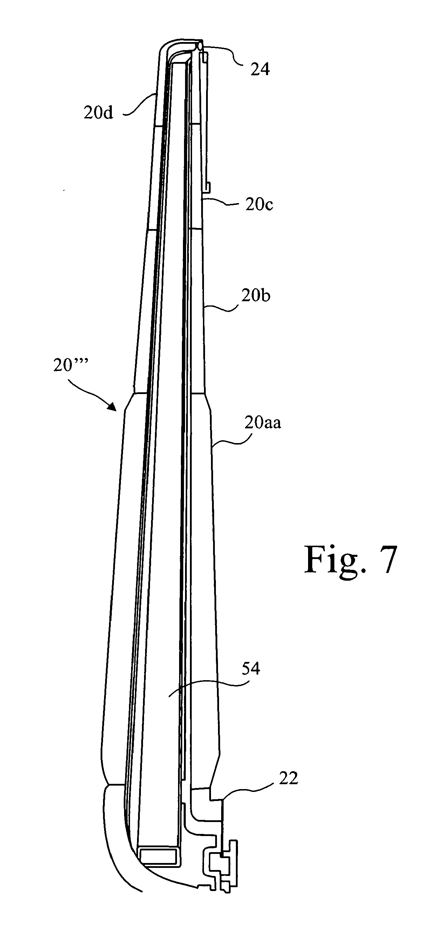

Finally, as shown in Figure 7, which is of view in the direction of arrow d in Figure 5, the brace 55 can be arranged to extend into the corner connectors 22, 24, further enhancing the rigidity of the arrangement. In Figure 7 four wall elements 20aa-d are connected together to form wall member 20"', having three short wall elements 20b-d, and one long element 20aa (with its channel 40d not being included).

The deepening 52 is ideally formed only when it is intended to join elements together end-to-end. The reason for this is that the deepening weakens the capacity of the wall elements to accept load, tending to spread the legs 12a,14a in the absence of the ribs, or, indeed, the brace 54. One option is to provide a biting tool that snips out appropriate depth of each rib 16. However, preferably a milling or routing cutter is employed since this easily cuts also the thicker side ends 181 of the wall elements, as well as the ribs 16.

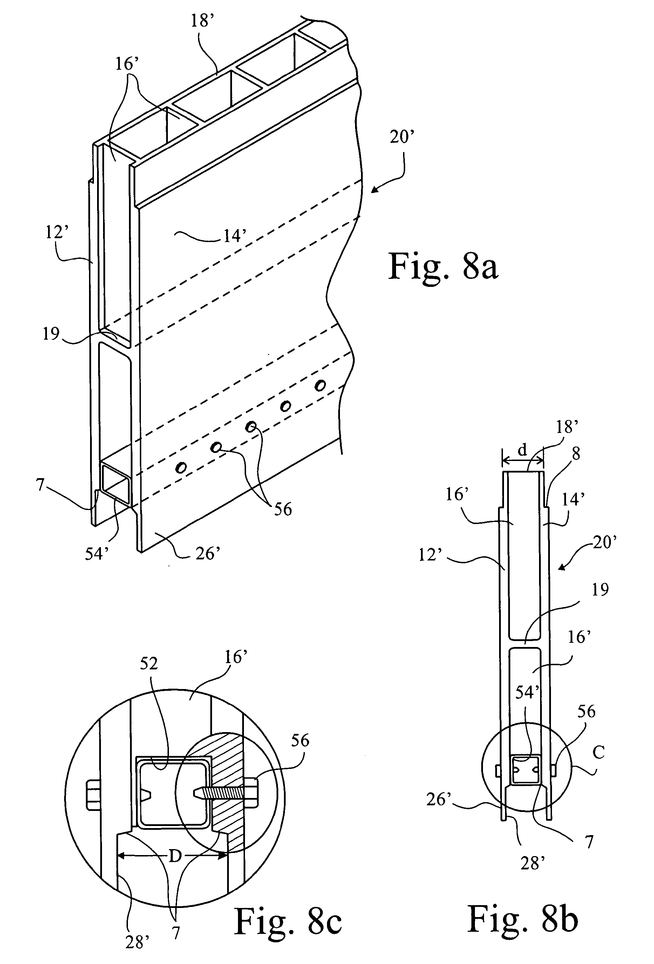

Turning to Figures 8a, b and c, a different kind of wall element 20' is shown and this element comprises inner and outer walls 12',14', and vertically extending ribs 16'. However, instead of being closed at the top nose 18', the top is open between the ribs. However, a horizontal bracing rib 19 extends from one end to the other of the element 20', about half way up its height. The element 20' is moulded between two mould halves (not shown) that separate from one another along the wall 19 and split perpendicularly therefrom. The nose 18' is shown with shoulders 8 forming a step. Similar steps 7 are shown forming the channel 28' at the base 26'. While the shoulders 8 are necessary because they counteract the required draw formed by the mould, the steps 7 may not be required, as the draw is adequate. In any event, the outside dimension d of the nose 18' is arranged to be a tight sliding fit within dimension D of the channel 28', so that wall elements 20' can be stacked one upon the other.

Wall elements 20' are also connectible end to end, by means not shown, to form a ring, whereby a chamber can be constructed as the previous embodiments mentioned above.

Likewise, individual wall elements 20' may individually be reinforced, and a similar approach using channel sections as described above could be employed. More importantly, however, the present invention can be implemented in the wall elements 20' by deepening the channel 28' at 52, by cutting away the ribs above the channel 28', and disposing a square or other rectangular section tube 54'. Bolts 56 can be screwed into the tube from either side to support the walls 12',14' on either side, and also to retain the tube 54' in place.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A wall member for constructing an underground chamber, said wall member comprising at least two wall elements joined end to end, each wall element comprising a plastics moulding that is hollow having spaced inner and outer walls separated by strengthening ribs joining said inner and outer walls, side ends of the element, being provided with connector means, a top nose of the element and a base thereof, which base is open to provide a channel, bounded by said inner and outer walls and the bases of said ribs, which channel is dimensioned to receive the nose of a corresponding wall element, wherein said channel is deepened and receives a metal strengthening brace that spans the joint between said wall elements, is connected to said inner and outer walls and forms a roof of said channel.

2. A wall member as claimed in claim 1, in which said brace is a tube.

3. A wall member as claimed in claim 2, in which said brace is a rectangular section tube.

4. A wall member as claimed in claim 1, 2 or 3, in which said connection to said inner and outer walls is by screws through the inner and outer walls into said brace, whereby the walls are supported against said brace.

5. A wall member as claimed in any preceding claim, in which said brace extends beyond the ends of said wall member, for connection with a corner connector adapted to be connected at each end of the wall member to form a ring.

6. A wall member as claimed in any preceding claim, in which said wall elements of said wall member are formed without said deepening of the channel, said deepening comprising a separate forming step when said brace is to be applied.

7. A wall member as claimed in claim 6, in which said forming step is a routing or milling operation.

8. A wall member as claimed in any preceding claim, in which said top nose of the element is closed.

9. A wall member as claimed in any of claims 1 to 8, in which said top nose is open, a bracing web extending transversely of said ribs, intermediate said nose and base of the wall element.

10. An underground chamber ring comprising a wall member as claimed in any preceding claim, first corner connectors at each end thereof and further wall elements and second corner connectors to form said ring as a closed ring, wherein said first corner connectors each comprise a hollow plastics moulding adapted to connect to the side ends of wall elements disposed at an angle with respect to one another, said moulding having a closed top providing a corner forming a continuation of said top noses of the adjoining wall elements, and an open base forming a continuation of said bases of the adjoining wall elements, and side ends provided with corresponding connector means and disposed at said angle with respect to one another, a notch in the side end wall adjoining said wall member into which an extension of said brace beyond the end of said side end of said wall member fits.

11. A ring as claimed in claim 10, in which said angle is substantially a right angle, and there are at least two of said wall members disposed on opposite sides of said ring, which ring is rectangular in plan, and all of said corner connectors are said first corner connectors.

12. A ring as claimed in claim 10 or 11, in which said first corner connectors are formed without said notch, and said notch comprises a separate forming step.

13. A ring as claimed in claim12, in which said first corner connectors, prior to said notch being formed therein are identical to said further corner connectors.

14. A ring as claimed in claim 12 or 13, in which said forming step is a grinding or milling operation.

15. An underground chamber, comprising a plurality of rings as claimed in any of claims 10 to 14 stacked one upon the other.
